# EUROPÄISCHE PATENTANMELDUNG

(11) **EP 4 056 868 A1**
(43) Veröffentlichungstag der Anmeldung: **14.09.2022**
(21) Anmeldenummer: 21161932.5
(22) Anmeldetag: 11.03.2021
(51) Int. Cl.: F16F 15/03

(54) **DÄMPFUNGSVORRICHTUNG FÜR EIN SCHIENENFAHRZEUG**

(71) Anmelder: Siemens Mobility Austria GmbH, 1210 Wien (AT)
(72) Erfinder: OOMEN, Marijn Pieter, 91056 Erlangen (DE); WILKE, Markus, 91054 Erlangen (DE); VONTZ, Thomas, 81539 München (DE); GERLICH, Matthias, 80636 München (DE)
(74) Vertreter: Deffner, Rolf

(57) **Zusammenfassung**

Es wird eine Dämpfungsvorrichtung (1) zur schwingungsisolierenden Kopplung zweier mechanischer Systeme, insbesondere zweier Teilsysteme in einem Schienenfahrzeug, angegeben,
- wobei die Dämpfungsvorrichtung (1) ein erstes (100) und ein zweites (200) Hauptelement aufweist, welche entlang einer zentralen Achse (A) relativ zueinander beweglich sind,
- wobei das erste Hauptelement (100) wenigstens ein zylindrisch geformtes Leiterelement (110, 115) aufweist, welches ringförmig um die zentrale Achse (A) angeordnet ist,
- und wobei das zweite Hauptelement (200) eine erste zylindrische Magneteinheit (210) aufweist, welche ringförmig um die zentrale Achse (A) angeordnet ist und eine Mehrzahl von ringförmigen Permanentmagneten (211, 212) aufweist, durch die im Bereich des zylindrischen Leiterelements (110, 115) eine mit der axialen Position variierende magnetische Flussdichte (B) ausgebildet wird,
- so dass eine axiale Relativbewegung (3) der beiden Hauptelemente (100,200) die Induktion eines Ringstroms in dem zylindrischen Leiterelement (110, 115) bewirken kann, wodurch eine Dämpfung der Relativbewegung (3) erfolgt,
- wobei das wenigstens eine Leiterelement (110, 115) so ausgelegt ist, dass bei der Dämpfung ein überwiegender Teil der umgewandelten kinetischen Energie in Wärme umgewandelt wird.

Weiterhin wird ein Schienenfahrzeug mit einer solchen Dämpfungsvorrichtung (1) angegeben.

## Beschreibung

Die vorliegende Erfindung betrifft eine Dämpfungsvorrichtung zur schwingungsisolierenden Kopplung zweier mechanischer Systeme, insbesondere zweier Teilsysteme in einem Schienenfahrzeug. Dabei weist die Dämpfungsvorrichtung zwei Hauptelemente auf, welche entlang einer zentralen Achse (A) relativ zueinander beweglich sind. Weiterhin betrifft die Erfindung ein Schienenfahrzeug mit einer solchen Dämpfungsvorrichtung.

Aus dem Stand der Technik sind verschiedene Typen von Dämpfungsvorrichtungen für Schienenfahrzeuge bekannt, die insbesondere in verschiedenen Bereichen des Fahrwerks eines Zuges zum Einsatz kommen. Diese Dämpfungsvorrichtungen verbessern einerseits den Fahrkomfort, andererseits aber auch die Sicherheit der Schienenfahrzeuge durch eine Stabilisierung der Fahrdynamik. In den Fahrwerken von herkömmlichen Schienenfahrzeugen kommen meist hydraulische Stoßdämpfer zum Einsatz. Es handelt sich dabei um eine relativ ausgereifte Technologie, mit der vergleichsweise robuste Stoßdämpfer zur Verfügung gestellt werden können. Hiermit kann eine vergleichsweise hohe Dämpfungskraft, auch bei niedrigen Geschwindigkeiten der gedämpften Bewegung und bei vergleichsweise niedrigem Dämpfervolumen erreicht werden. Ein Nachteil von solchen hydraulischen Dämpfern ist, dass während der vergleichsweise langen Betriebsdauern Probleme mit Leckagen der Hydraulikflüssigkeit auftreten können, wodurch sich Verschleiß und unerwünschter Wartungsaufwand ergibt. Außerdem weisen solche hydraulischen Dämpfer meist keine Möglichkeiten zur Diagnose oder zum Monitoring auf, durch welche ein Verschleiß bzw. eine Veränderung der Dämpfungscharakteristik im Betrieb überwacht werden könnte.

Aus dem Automobilbereich sind auch andere Dämpfertechnologien bekannt, zum Beispiel magnetorheologische oder elektromagnetische Dämpfer oder Kombinationen daraus. Diese Technologien werden dort vor allem mit dem Ziel eingesetzt, elektrische Energie während des Betriebs rückgewinnen zu können und/oder die Dämpfercharakteristik während des Betriebs einstellen zu können. Die bekannten elektromagnetischen Dämpfer aus dem Automobilbereich haben jedoch bisher kaum Anwendung in der Bahntechnik gefunden. Eine Schwierigkeit ist in diesem Zusammenhang, dass elektromagnetische Dämpfer meist weniger robust sind und im Vergleich zu hydraulischen Dämpfern sogar noch wartungsintensiver sein können. Gerade in der Bahntechnik müssen lange Betriebsdauern unter harten Umweltbedingungen erreicht werden. Daher ist es für diese Anwendung weniger wünschenswert, wenn die Dämpfungsvorrichtung mit äußeren elektrischen Anschlüssen versehen ist, welche durch Umwelteinflüsse beschädigt werden können. Neben der Robustheit und einem geringen Wartungsaufwand ist es außerdem wünschenswert, wenn eine Dämpfungsvorrichtung für ein Schienenfahrzeug eine Retrofit-Lösung ermöglicht, wenn sie also die Spezifikationen eines herkömmlichen hydraulischen Dämpfers in Bezug auf die Dämpfungseigenschaften, aber auch die räumlichen Abmessungen möglichst gut erfüllen kann. Auch diese Anforderungen, insbesondere in Bezug auf die hohen Dämpfungskräfte bei niedriger Geschwindigkeit und kleinem Volumen, sind mit herkömmlichen elektromagnetischen Dämpfern aus dem Automobilbereich schwer zu erreichen.

Aufgabe der Erfindung ist es daher, eine Dämpfungsvorrichtung für ein Schienenfahrzeug anzugeben, welche die genannten Nachteile überwindet. Insbesondere soll eine Dämpfungsvorrichtung zur Verfügung gestellt werden, welche robust und wartungsarm ist und insbesondere als Alternative zu einer herkömmlichen hydraulischen Dämpfungsvorrichtung im Sinne einer Retrofit-Lösung eingesetzt werden kann. Eine weitere Aufgabe ist es, ein Schienenfahrzeug mit einer solchen Dämpfungsvorrichtung zur Verfügung zu stellen.

Diese Aufgaben werden durch die in Anspruch 1 beschriebene Dämpfungsvorrichtung und das in Anspruch 15 beschriebene Schienenfahrzeug gelöst.

Die erfindungsgemäße Dämpfungsvorrichtung dient zur schwingungsisolierenden Kopplung zweier mechanischer Systeme, insbesondere zweier Teilsysteme in einem Schienenfahrzeug. Die Dämpfungsvorrichtung weist ein erstes und ein zweites Hauptelement auf, welche entlang einer zentralen Achse relativ zueinander beweglich sind. Das erste Hauptelement weist wenigstens ein zylindrisch geformtes Leiterelement auf, welches ringförmig um die zentrale Achse angeordnet ist. Das zweite Hauptelement weist eine erste zylindrische Magneteinheit auf, welche ringförmig um die zentrale Achse angeordnet ist und eine Mehrzahl von ringförmigen Permanentmagneten umfasst. Durch diese Permanentmagnete wird im Bereich des zylindrischen Leiterelements eine mit der axialen Position variierende magnetische Flussdichte ausgebildet, so dass eine axiale Relativbewegung der beiden Hauptelemente die Induktion eines Ringstroms in dem zylindrischen Leiterelements bewirken kann, wodurch eine Dämpfung der Relativbewegung erfolgt. Dabei ist das wenigstens eine Leiterelement so ausgelegt, dass bei der Dämpfung ein überwiegender Teil der umgewandelten kinetischen Energie in Wärme umgewandelt wird.

Unter einer schwingungsisolierenden Kopplung soll hier allgemein eine Kopplung zweier Teilsysteme verstanden werden, bei denen die Bewegungen eines Teilsystems nicht starr auf das jeweils andere Teilsystem übertragen werden. Mit anderen Worten soll hierbei eine Dämpfung einer Relativbewegung zwischen den beiden Teilsystemen erreicht werden.

Dabei dient beispielsweise das erste Hauptelement zur Anbindung an das erste mechanische Teilsystem, und das zweite Hauptelement dient zur Anbindung an das zweite mechanische Teilsystem. Bezogen auf das Referenzsystem des Schienenfahrzeugs kann dabei prinzipiell entweder das erste Hauptelement im Wesentlichen feststehend sein und das zweite Hauptelement beweglich sein oder umgekehrt. Es können auch beide Hauptelemente innerhalb des Fahrwerks zumindest teilweise beweglich sein. Wesentlich ist nur, dass zwischen den beiden Hauptelementen eine Relativbewegung entlang der zentralen Achse möglich ist, welche mittels der Dämpfungsvorrichtung gedämpft werden kann. Die zentrale Achse kann daher auch als Kopplungsachse bezeichnet werden, da die Relativbewegung der beiden zu koppelnden Systeme entlang dieser Achse erfolgt.

Das wenigstens eine zylindrische, ringförmige Leiterelement des ersten Hauptelements ermöglicht einen ringförmig geschlossenen Stromfluss um die zentrale Achse herum. In diesem Leiterelement kann daher beim Betrieb der Dämpfungsvorrichtung ein Ringstrom induziert werden. Es können auch mehrere solcher ringförmigen Leiterelemente vorgesehen sein. Prinzipiell kann es sich bei dem wenigstens einen Leiterelement um einen massiven Ringleiter oder auch um eine ringförmig geschlossene Spule mit einer oder mehreren Leiterwindungen handeln. Wenn eine Mehrzahl von Leiterelementen im ersten Hauptelement vorliegt, kann auch eine Kombination von diesen beiden Typen vorhanden sein. Beispielsweise kann das erste Hauptelement einen axialen Stapel von mehreren ringförmig geschlossenen Leiterelementen umfassen. Die Anordnung aus einem oder mehreren Leiterelementen ist allgemein vorteilhaft rotationssymmetrisch um die zentrale Achse. Das ist aber nicht unbedingt erforderlich: Unter einem zylindrischen Körper soll hier nach der allgemeinen geometrischen Definition ein Körper verstanden werden, der durch Verschiebung einer ebenen Grundfläche entlang einer (insbesondere senkrecht zu ihr stehenden) Gerade entsteht. Die Form ist also nicht auf Zylinder mit kreisförmiger Grundfläche beschränkt, sondern das grundlegende Konzept kann auch mit zylindrischen Leiterelementen und Magneteinheiten mit anderen Grundformen umgesetzt werden, beispielsweise auch mit ovaler oder rechteckiger Form.

Auch die zylindrische Magneteinheit des zweiten Hauptelements kann vorteilhaft rotationssymmetrisch um die zentrale Achse angeordnet sein. Optional kann zusätzlich zu der ersten noch eine zweite zylindrische Magneteinheit vorgesehen sein. Wenn allerdings nur eine solche Magneteinheit vorliegt, dann ist es zweckmäßig, wenn diese radial innerhalb des wenigstens einen zylindrischen Leiterelements angeordnet ist. Auf diese Weise kann mit vergleichsweise geringem apparativem Aufwand ein geeigneter magnetischer Fluss innerhalb des ringförmigen Leiterelements bewirkt werden. Im radial außenliegenden Bereich kann dann beispielsweise ein zusätzliches flussführendes Element angeordnet sein.

Die wenigstens eine Magneteinheit ist so ausgestaltet, dass im Bereich des wenigstens einen ringförmigen Leiterelements eine mit der axialen Position variierende magnetische Flussdichte ausgebildet wird. Die magnetische Flussdichte kann im Bereich dieses Leiterelements radiale und/oder axiale Flusskomponenten aufweisen. Wesentlich ist, dass die Flussdichte über die axiale Position variiert, so dass bei einer axialen Relativbewegung zwischen dem wenigstens einen ringförmigen Leiterelement (im ersten Hauptelement) und der wenigstens einen Magneteinheit (im zweiten Hauptelement) ein Ringstrom in dem Leiterelement induziert werden kann. Zweckmäßig ist das wenigstens eine ringförmige Leiterelement aus einem verhältnismäßig gut leitenden metallischen Material mit geringem ohmschen Widerstand gebildet, so dass sich ein starker Stromfluss ausbilden kann.

Aufgrund des im Leiterelement induzierten Ringstroms und des dabei wirkenden ohmschen Widerstandes des Leiterelements kommt es zu einer Dissipation von Wärme im Material des Leiterelements. Die Dämpfungsvorrichtung soll also mit anderen Worten nach dem Prinzip eines Wirbelstrom-Dämpfers arbeiten. Dabei soll die gesamte Dämpfungsvorrichtung (und insbesondere das wenigstens eine Leiterelement) so ausgelegt sein, dass der überwiegende Teil der bei der Dämpfung umgewandelten kinetischen Energie in Wärme umgewandelt wird. Wenn die umgewandelte kinetische Energie im Wesentlichen vollständig in Wärme umgewandelt wird, handelt es sich um eine rein passive Dämpfungsvorrichtung. Bei dieser Variante sind alle vorliegenden ringförmigen Leiterelemente als passive Leiterelemente (also ohne elektrische Anschlüsse) ausgebildet. Alternativ sind jedoch auch semi-aktive Ausführungsformen denkbar, wie weiter unten beschrieben. Wesentlich im Zusammenhang mit der Erfindung ist, dass der überwiegende Teil - also mehr als die Hälfte - der bei der Dämpfung umgewandelten kinetischen Energie in Wärme umgewandelt wird, dass es sich also mit anderen Worten um eine überwiegend passive Dämpfung handelt. Dies wird insbesondere dadurch erreicht, dass das erste Hauptelement zumindest ein passives ringförmiges Leiterelement ohne elektrische Anschlüsse enthält und dort der überwiegende Teil der umgesetzten Energie dissipiert wird.

Ein wesentlicher Vorteil der beschriebenen Dämpfungsvorrichtung liegt darin, dass sie aufgrund der überwiegend passiven Funktionsweise relativ robust ausgestaltet werden kann und insbesondere keine elektrischen Verbindungen zu einem Bereich außerhalb der Dämpfungsvorrichtung benötigt. Hierdurch kann eine lange Lebensdauer und ein geringer Wartungsaufwand erreicht werden. Außerdem ist es möglich, mit einem solchen überwiegend passiven Wirbelstrom-Dämpfer eine vergleichsweise hohe Dämpfungskraft auch bei niedrigen Relativ-Geschwindigkeiten und bei einem vergleichsweise geringen Volumen der Dämpfungsvorrichtung zu erreichen. Dadurch werden Retrofit-Lösungen als Ersatz für herkömmliche hydraulische Dämpfer in der Bahntechnik ermöglicht.

Das erfindungsgemäße Schienenfahrzeug umfasst wenigstens eine erfindungsgemäße Dämpfungsvorrichtung. Die Vorteile dieses Schienenfahrzeugs ergeben sich analog zu den oben beschriebenen Vorteilen der erfindungsgemäßen Dämpfungsvorrichtung. So kann durch die erfindungsgemäße Dämpfungsvorrichtung beispielsweise ein vertikaler Primärdämpfer des Schienenfahrzeugs realisiert sein. Alternativ oder zusätzlich kann aber auch ein vertikaler Sekundärdämpfer und/oder ein Schlingerdämpfer auf die erfindungsgemäße Weise realisiert sein.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen der Dämpfungsvorrichtung und des Schienenfahrzeugs allgemein vorteilhaft miteinander kombiniert werden.

So kann das zweite Hauptelement allgemein vorteilhaft zusätzlich eine zweite zylindrische Magneteinheit aufweisen, welche ringförmig um die zentrale Achse angeordnet ist und eine Mehrzahl von ringförmigen Permanentmagneten aufweist. Dabei ist insbesondere die erste Magneteinheit radial innerhalb und die zweite Magneteinheit radial außerhalb von dem wenigstens einen zylindrischen Leiterelement angeordnet. Mit anderen Worten ist das wenigstens eine ringförmige Leiterelement hier radial zwischen den beiden Magneteinheiten positioniert. Auf diese Weise können die beiden Magneteinheiten vorteilhaft zusammenwirken, um im Bereich des Leiterelements eine mit der axialen Position variierende magnetische Flussdichte auszubilden. Mit einer solchen radialen Sandwich-Anordnung kann ein besonders hoher Induktionsstrom im Leiterelement erreicht werden.

Allgemein und unabhängig von der genauen Anzahl und Anordnung der Magneteinheiten können die einzelnen darin enthaltenen ringförmigen Permanentmagnete vorteilhaft Magnete auf der Basis von ein oder mehreren Elementen der seltenen Erden sein. Beispielsweise können Magnete auf der Basis von Neodym, z.B. intermetallische Verbindungen aus Neodym, Eisen und Bor (NdFeB), zum Einsatz kommen. Allgemein können mit solchen Seltenerdmagneten besonders hohe magnetische Flussdichten mit einer starken Ortsabhängigkeit erreicht werden.

Die radial innenliegende Magneteinheit kann allgemein vorteilhaft von einem zentralen Trägerstab oder Trägerrohr gestützt sein. Dieser Trägerstab kann beispielsweise aus einem amagnetischen metallischen Material, insbesondere einem amagnetischen Stahl oder Aluminium gebildet sein.

Allgemein vorteilhaft kann die jeweilige Magneteinheit einen axialen Stapel von ringförmigen Permanentmagneten aufweisen. Dies gilt sowohl für die radial innere als auch die radial äußere Magneteinheit (soweit vorhanden). Innerhalb eines solchen axialen Stapels können beispielsweise mehrere radiale Magnetringe und/oder mehrere axiale Magnetringe angeordnet sein. Bei einem radialen Magnetring sind Nord- und Südpol in radialer Richtung ausgerichtet, bei einem axialen Magnetring sind Nord- und Südpol dagegen in axialer Richtung voneinander ausgerichtet. Beide Arten von Magnetringen können vorteilhaft rotationssymmetrisch ausgestaltet sein. Die Magnetringe können gemäß einer ersten Ausführungsvariante jeweils einstückig ausgebildet sein. Alternativ können die Magnetringe aber auch jeweils aus einzelnen Blöcken zusammengesetzt sein, beispielsweise aus azimutalen Ringsegmenten.

Allgemein vorteilhaft kann die jeweilige Magneteinheit so ausgestaltet sein, dass sich eine axiale Abfolge von mehreren axialen Teilsegmenten mit jeweils ringförmig geschlossenem magnetischem Fluss ausbildet, so dass die Richtung des radialen Flusses im Leiterelement in Abhängigkeit von der axialen Position wechselt. Dabei kann es sich besonders vorteilhaft um eine periodische axiale Abfolge mit wechselnder Flussrichtung handeln. Alternativ kann aber auch eine aperiodische Abfolge vorliegen, so dass die magnetische Flussdichte von der übergeordneten axialen Position abhängt. Dies kann beispielsweise zweckmäßig sein, um abhängig von der Eintauchtiefe der Dämpfungsvorrichtung eine gezielte Variation der Dämpfungseigenschaften zu erreichen.

Zusätzlich zu den axialen und/oder radialen Magnetringen kann die jeweilige Magneteinheit auch flussführende Zwischenstücke, beispielsweise aus Eisen oder einer eisenhaltigen Legierung umfassen. So kann beispielsweise auch aus einer Abfolge von nur axialen Magnetringen und entsprechenden Zwischenstücken eine Anordnung von axialen Segmenten mit wechselnder radialer Flussrichtung gebildet sein. Alternativ kann aus einer Abfolge von nur radialen Magnetringen und entsprechenden Zwischenstücken eine solche wechselnde Anordnung gebildet sein.

Die einzelnen Permanentmagnete eines solchen axialen Stapels können beispielsweise untereinander gleich dimensioniert sein, insbesondere sowohl in axialer als auch in radialer Richtung. So kann ein besonders regelmäßiger Aufbau erzeugt werden. Alternativ können die Abmessungen der einzelnen Permanentmagnete aber auch in axialer und/oder in radialer Richtung variieren, insbesondere um eine gezielte Flussformung in Abhängigkeit von der axialen Position zu bewirken.

Gemäß einer allgemein besonders vorteilhaften Ausführungsform ist die jeweilige Magneteinheit als ringförmiges Halbach-Array gebildet. Mit anderen Worten ist jeweils ein Array aus axialen und radialen Permanentmagneten gebildet, bei dem ein regelmäßiger Wechsel der Magnetisierungsrichtung zwischen benachbarten Elementen vorliegt. Das Winkelinkrement zwischen benachbarten Elementen kann beispielsweise 90° oder 45° betragen, aber auch andere Winkelinkremente sind allgemein möglich. Zweckmäßig ist ein solches Halbach-Array so ausgebildet, dass die dem ringförmigen Leiterelement zugewandte radiale Seite der Seite mit dem verstärkten magnetischen Fluss entspricht. Auf diese Weise kann eine besonders hohe Induktion in dem Leiterelement bewirkt werden.

Gemäß einer vorteilhaften Ausführungsform des ersten Hauptelements kann dieses ein oder mehrere massive, ringförmige zylindrische Leiterelemente aufweisen. Solche Leiterringe stellen eine besonders einfache und robuste Realisierung eines passiven Leiterelements (ohne elektrische Anschlüsse) dar. Dabei kann vorteilhaft ein Leitermaterial mit einem besonders niedrigen spezifischen Widerstand gewählt sein, beispielsweise Kupfer. Wenn mehrere solche zylindrische Leiterringe vorliegen, können diese vorteilhaft in einem axialen Stapel angeordnet sein. Bei einer besonders robusten, vollständig passiven Ausführungsform der Dämpfungsvorrichtung weist das erste Hauptelement ausschließlich solche massiven Leiterringe auf.

Alternativ oder zusätzlich zu den beschriebenen massiven Leiterringen kann das erste Hauptelement aber auch wenigstens eine zylindrische Spule mit ein oder mehreren Leiterwindungen aufweisen. Prinzipiell kann es sich dabei um eine in sich kurzgeschlossene, passive Spule ohne äußere elektrische Anschlüsse handeln. Alternativ kann aber auch ein Teil der vorhandenen Leiterelemente als aktive Spule, also mit elektrischen Anschlüssen zur Verbindung mit einem äußeren Stromkreis, ausgebildet sein. Es kann sich dann also mit anderen Worten um eine semi-aktive Dämpfungsvorrichtung handeln, bei der im ersten Hauptelement sowohl ein oder mehrere passive ringförmige Leiterelemente als auch ein oder mehrere aktive Leiterelemente vorliegen. Auch bei dieser Ausführungsvariante soll jedoch ein überwiegender Teil der umgesetzten Energie in den jeweiligen passiven Leiterelementen in Wärme dissipiert werden.
Gemäß einer vorteilhaften Ausführungsform der semi-aktiven Dämpfungsvorrichtung kann der äußere Stromkreis zur Messung einer elektrischen Kenngröße der Spule ausgelegt sein. Mit anderen Worten kann beispielsweise ein Strom- oder Spannungssensor vorgesehen sein, mit welchem ein Zustand des Dämpfers oder auch ein fahrdynamischer Zustand des ganzen Schienenfahrzeugs überwacht werden kann. So kann beispielsweise ein Verschleiß des Dämpfers überwacht werden oder auch ein kritischer Fahrzustand eines Zuges detektiert werden. Für einen solchen Sensor ist eine vergleichsweise kleine Spule ausreichend, welche in einem axialen Stapel mit anderen Leiterelementen (weiteren Spulen und/oder massiven Leiterringen) vorliegen kann.

Gemäß einer weiteren vorteilhaften Ausführungsform der semi-aktiven Dämpfungsvorrichtung kann der äußere Stromkreis zur Regelung einer elektrischen Eigenschaft des Stromkreises ausgelegt sein. So kann insbesondere über einen zuschaltbaren bzw. variablen, außerhalb der Spule liegenden Widerstand eine Einstellung der Dämpfungseigenschaften bewirkt werden. So kann z.B. eine Abhängigkeit der Dämpfungseigenschaften von der Eintauchtiefe bei Bedarf zumindest teilweise kompensiert werden. Außerdem kann auf diese Weise erreicht werden, dass die dissipierte Wärme zumindest teilweise außerhalb der eigentlichen zylindrischen Leiterelemente freigesetzt wird.

Gemäß einer weiteren vorteilhaften Ausführungsform der semi-aktiven Dämpfungsvorrichtung kann der äußere Stromkreis zur Rückgewinnung von elektrischer Energie aus der gedämpften Bewegung ausgelegt sein. Auf diese Weise kann insbesondere eine für den Sensor und/oder die Regelung der Dämpfungseigenschaften benötigte elektrische Energie lokal erzeugt werden. Vorteilhaft können also die einzelnen Ausführungsvarianten der semi-aktiven Ausführung auch miteinander kombiniert werden.

Allgemein und unabhängig davon, ob die Dämpfungsvorrichtung rein passiv oder semi-aktiv ausgebildet ist, ist es vorteilhaft, wenn die Vorrichtung insgesamt energieautark ist. Mit anderen Worten kann sie ohne nach außen führende elektrische Verbindungen ausgestaltet sein. Eine solche energie-autarke Ausführung kann bei der semi-aktiven Variante durch die beschriebene lokale Rückgewinnung von elektrischer Energie erreicht werden. Damit kann die Dämpfungsvorrichtung trotz der elektrischen Komponenten wie Spule, Sensor und/oder Regelung vergleichsweise robust und ohne äußere elektrische Energieversorgung ausgestaltet sein.

Alternativ oder zusätzlich zu dem beschriebenen elektrischen Sensor kann die Dämpfungsvorrichtung auch ein oder mehrere magnetische Sensoren im Bereich des ersten und/oder zweiten Hauptelements umfassen. Auch über derartige magnetische Sensoren kann eine Diagnose der Dämpfungsvorrichtung bzw. einer Überwachung des Fahrzustandes ermöglicht werden. Auch ein solcher magnetischer Sensor kann gegebenenfalls mit der rückgewonnenen Energie aus einer semi-aktiven Dämpfungsvorrichtung versorgt werden, was eine energie-autarke Ausführung ermöglicht. Sowohl bei einem solchen magnetischen Sensor als auch bei dem oben beschriebenen elektrischen Sensor kann dabei das gemessene Signal über eine Funkvorrichtung an einen Empfänger außerhalb der Vorrichtung übermittelt werden. Auch für die Funkvorrichtung kann die rückgewonnene Energie genutzt werden.

Bei einer weiteren allgemein vorteilhaften Ausführungsform ist im Bereich eines radialen Zwischenraums zwischen dem ersten Hauptelement und dem zweiten Hauptelement zumindest eines der Hauptelemente oder auch beide mit Polytetrafluorethylen beschichtet. Eine solche Beschichtung dient einer Unterstützung der axial gegeneinander beweglich gelagerten Führung dieser beiden Elemente und unterstützt das axiale Gleiten. Hierbei wirkt sich die relativ hohe Temperaturbeständigkeit des Beschichtungsmaterials positiv aus. Wenn eine solche Beschichtung zum Einsatz kommt, kann auch der radiale jeweilige Spalt zwischen den beiden Hauptelementen dünner ausgeführt werden als bei einer entsprechenden Variante ohne solche Gleitschicht. Bei den Ausführungsformen mit zwei Magneteinheiten (radial innerhalb und radial außerhalb des wenigstens einen ringförmigen Leiterelements) können entsprechend bei beiden radialen Zwischenräumen solche Beschichtungen vorgesehen sein.

Optional kann das wenigstens eine zylindrisch geformte Leiterelement mechanisch von einem radial innenliegenden und/oder einem radial außenliegenden metallischen Trägerrohr gestützt sein. Dies kann in entsprechender Weise auch für eine Mehrzahl von axial gestapelten Leiterelementen gelten, welche zusammen von solchen einem Trägerrohr getragen werden können. Das Rohr kann beispielsweise aus Stahl sein, um den/die weiche(n) Kupferzylinder mechanisch zu stützen.

Gemäß einer weiteren Ausführungsform kann das erste Hauptelement ein erstes Befestigungselement aufweisen, welches zur mechanischen Verbindung mit dem ersten mechanischen Teilsystem ausgelegt ist. Dann kann das wenigstens eine zylindrisch geformte Leiterelement über ein metallisches Verbindungselement mit diesem Befestigungselement verbunden sein. Durch ein solches metallisches Verbindungselement kann eine gute thermische Anbindung und damit eine effektive Entwärmung des wenigstens einen zylindrischen Leiterelements bewirkt werden, so dass die dort dissipierte Energie an die äußere Umgebung abgeführt werden kann. Alternativ oder zusätzlich kann das wenigstens eine Leiterelement über ein metallisches Verbindungselement mit einer Außenfläche des ersten Hauptelements verbunden sein, um so ebenfalls eine effiziente Wärmeabfuhr zu ermöglichen. Weiterhin kann es vorteilhaft sein, wenn eine ggf. vorhandene radial außenliegende Magneteinrichtung an ausgewählten axialen Positionen mit dünnen metallischen Ringscheiben durchsetzt ist, um die im zylindrischen Leiterelement dissipierte Wärme durch diese Magneteinrichtung hindurch nach radial außen abzuleiten. Solche metallischen Verbindungselemente wirken - falls sie als ringförmige Zylinder ausgebildet sind - ebenfalls als zylindrische Leiterelemente, in denen sich Ringströme ausbilden können. Dies ist zwar nicht ihr Hauptzweck, aber sie können auf diese Weise die Wirkung des eigentlichen zylindrischen Leiterelement verstärken.

Gemäß einer weiteren Ausführungsform kann das erste Hauptelement eine Mehrzahl von konzentrisch ineinander liegenden zylindrischen Leiterelementen bzw. axialen Stapeln solcher Leiterelemente aufweisen. Dabei kann jedem Leiterelement bzw. jedem axialen Stapel von Leiterelementen zumindest eine radial benachbarte, zugeordnete Magneteinheit aufweisen. Insbesondere kann die zugeordnete Magneteinheit jeweils radial innenliegend innerhalb des zugeordneten Leiterelements angeordnet sein. Auf diese Weise ergibt sich eine insgesamt konzentrische, ineinander geschachtelte Abfolge von mehreren zylindrischen Leiteranordnungen und mehreren zylindrischen Magneteinheiten. Dabei befinden sich die Leiteranordnungen zusammen auf dem ersten Hauptelement, und die Magneteinheiten befinden sich zusammen auf dem zweiten Hauptelement. Ein Vorteil dieser ineinander geschachtelten Ausführungsvariante ist, dass sich aufgrund der dünneren Leiterzylinder geringere Skin-Effekte ausbilden.

Allgemein kann durch die relative axiale Position von erstem und zweitem Hauptelement eine Eintauchtiefe der Dämpfungsvorrichtung definiert sein. Die maximale Eintauchtiefe kann dabei durch einen axialen Anschlag des einen Hauptelements innerhalb des anderen Hauptelements gegeben sein. In dieser Position ist typischerweise der größte axiale Überlapp zwischen dem wenigstens einen Leiterelement und der wenigstens einen Magneteinheit gegeben. Bei der minimalen Eintauchtiefe kann dieser axiale Überlapp dagegen deutlich verringert sein. Die Dämpfungsvorrichtung kann vorteilhaft so ausgestaltet sein, dass bei einer größeren Eintauchtiefe ein größerer axialer Überlapp zwischen erstem und zweitem Hauptelement gegeben ist und dadurch eine stärkere Dämpfung bewirkt wird. Mit anderen Worten ist dann die Dämpfungscharakteristik von der axialen Auslenkung der Dämpfungsvorrichtung abhängig, wodurch eine automatische Variation der Eigenschaften während der axialen Bewegung erfolgt. Dies kann für die Fahreigenschaften des Schienenfahrzeugs vorteilhaft sein, insbesondere wenn eine stärkere Beladung zu einer größeren Eintauchtiefe führt und gerade dort eine stärkere Dämpfung erreicht wird. Es ist auch eine gezielte Formung eines solchen auslenkungsabhängigen Dämpfungsprofils möglich, beispielsweise indem die einzelnen Permanentmagnete nicht in einer gleichmäßigen periodischen Abfolge angeordnet werden, sondern in ihrer Dimensionierung abhängig von der axialen Position unterschiedlich sind.

Insgesamt kann die Dämpfungsvorrichtung vorteilhaft so ausgelegt sein, dass bei einer Relativgeschwindigkeit der beiden Hauptelemente von 1 m/s eine Dämpfungskraft von wenigstens 6 kN und insbesondere sogar wenigstens 8 kN bewirkt wird. Dies entspricht einer typischen Anforderung eines vertikalen Dämpfers in einem Schienenfahrzeug. Besonders vorteilhaft kann diese Dämpfungskraft auch bei einem besonders kompakten Bauvolumen der Dämpfungsvorrichtung erreicht werden, so dass beispielsweise eine sogenannte Dämpfungsdichte von wenigstens 4 MN/((m/s) ·m³) und insbesondere 6 MN/((m/s) ·m³) erreicht werden kann, also mit anderen Worten eine hohe Dämpfungskraft bei geringer Relativgeschwindigkeit und geringem Bauvolumen. Nachfolgend wird die Erfindung anhand einiger bevorzugter Ausführungsbeispiele unter Bezugnahme auf die angehängten Zeichnungen beschrieben, in denen:
- Figur 1: einen schematischen Längsschnitt einer Dämpfungsvorrichtung nach einem ersten Beispiel der Erfindung zeigt,
- Figur 2: einen Teilbereich der Vorrichtung der Figur 1 zeigt,
- Figur 3: simulierte Werte für die Dämpfungskraft einer solchen Vorrichtung zeigt und
- Figur 4: einen Teilbereich einer Vorrichtung nach einem weiteren Beispiel der Erfindung zeigt.

In den Figuren sind gleiche oder funktionsgleiche Elemente mit gleichen Bezugszeichen versehen.

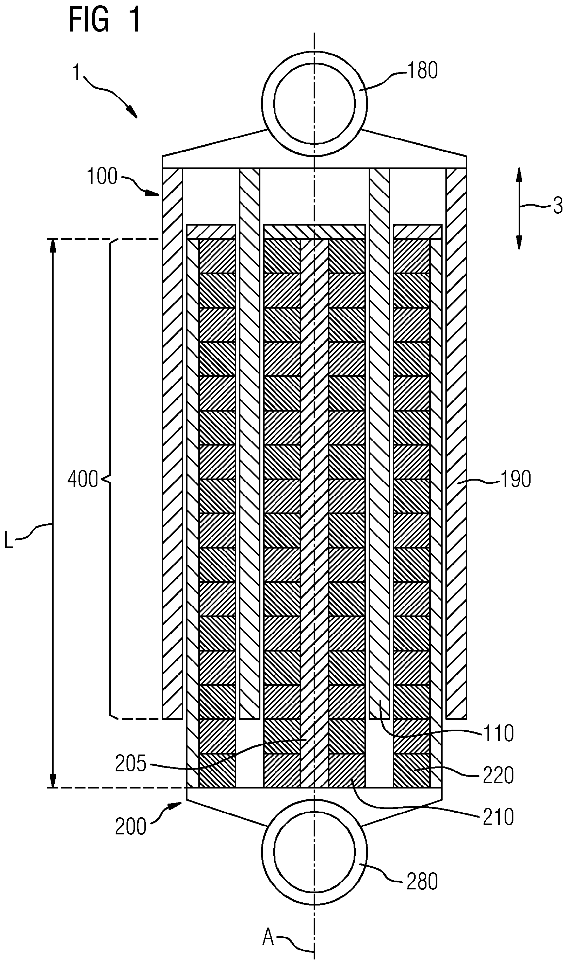

In Figur 1 ist eine Dämpfungsvorrichtung 1 nach einem ersten Beispiel der Erfindung im schematischen Längsschnitt gezeigt. Diese Dämpfungsvorrichtung kann in einem Schienenfahrzeug zum Einsatz kommen, beispielsweise in der vertikalen Primärfederung eines Zuges. Alternativ kann sie auch für die vertikale Sekundärfederung oder als Schlingerdämpfer zum Einsatz kommen. Um die Dämpfungsvorrichtung 1 mit den relevanten mechanischen Teilsystemen des Schienenfahrzeugs zu verbinden, weist diese zwei Befestigungselemente 180 und 280 auf, welche hier als Ringe ausgestaltet sind. So kann ein solcher Befestigungsring beispielsweise mit einem Drehgestell oder einem Wagenkasten eines Schienenfahrzeugs verbunden werden.

Die Dämpfungsvorrichtung 1 dient der Dämpfung einer Relativbewegung 3 zwischen den beiden zu koppelnden mechanischen Teilsystemen. Hierzu weist die Vorrichtung ein erstes Hauptelement 100 auf, welches über das erste Befestigungselement 180 mit dem ersten Teilsystem verbunden werden kann und ein zweites Hauptelement 200, welches über das zweite Befestigungselement 280 mit dem zweiten Teilsystem verbunden werden kann. Die Relativbewegung 3 erfolgt entlang einer zentralen Achse A, welche entsprechend die Kopplungsachse darstellt. Die Dämpfungsvorrichtung 1 ist weitgehend rotationssymmetrisch zu dieser zentralen Achse A aufgebaut, wobei in Figur 1 ein schematischer axialer Längsschnitt gezeigt ist.

Das erste Hauptelement 100 weist ein zylindrisch geformtes Leiterelement 110 auf, welches die zentrale Achse A ringförmig umgibt. In diesem Beispiel ist das Leiterelement 110 als massiver, hohler Kupfer-Zylinder ausgestaltet. Eine optional vorhandene Tragestruktur für diesen Kupferzylinder ist der Übersichtlichkeit halber nicht mit eingezeichnet. Er kann jedoch beispielsweise von einem Trägerrohr aus Stahl (radial innen oder außen) mechanisch gestützt sein. In jedem Fall ist das zylinderförmige Leiterelement mit dem Kopfteil des ersten Hauptelements verbunden und somit zusammen mit dem ersten Befestigungselement 180 relativ zu dem zweiten Hauptelement 200 beweglich. Das erste Hauptelement 100 weist außerdem eine hohlzylindrische Außenwand 190 auf, welche die radial weiter innenliegenden Teile der Vorrichtung 1 vor Umwelteinflüssen schützt. Zusammen sind diese Bestandteile des ersten Hauptelemente entlang der Bewegungsrichtung 3 gegen das zweite Hauptelement beweglich, wobei unerheblich ist, welches der beiden Hauptelemente dabei absolut gesehen beweglich ist und welches gegebenenfalls feststehend ist.

Das zweite Hauptelement 200 weist einen zentralen Trägerstab 205 auf, auf welchem eine erste zylindrische Magneteinheit 210 angeordnet ist. Der Trägerstab kann aus einem metallischen Material gebildet sein, beispielsweise aus einem amagnetischen Stahl oder Aluminium. Die erste zylindrische Magneteinheit 210 umfasst einen axialen Stapel aus einzelnen ringförmigen Permanentmagneten.

Die zylindrische Struktur der ersten Magneteinheit 210 und das ebenfalls zylindrische erste Leiterelement 110 sind in axialer Richtung A gegeneinander beweglich. Dabei dient die erste Magneteinheit 210 (welche hier radial innenliegend angeordnet ist) dazu, im Bereich des zylindrischen Leiterelements 110 eine mit der axialen Position variierende magnetische Flussdichte auszubilden. Hierdurch wird erreicht, dass bei einer axialen Relativbewegung 3 in dem ringförmigen Leiterelement ein Ringstrom um die zentrale Achse induziert wird. Durch diesen Stromfluss wird ein Dämpfungseffekt nach Art einer Wirbelstrombremse erreicht, wobei ein Teil der mit der Relativbewegung verbundenen kinetischen Energie im Leiterelement 110 in Wärme dissipiert wird. Beim Beispiel der Figur 1 liegt nur ein einzelnes passives ringförmiges Leiterelement 110 ohne elektrische Anschlüsse vor, so dass die umgewandelte kinetische Energie im Wesentlichen vollständig in Wärme dissipiert wird.

Beim Beispiel der Figur 1 ist das zylindrische Leiterelement 110 radial außen von einer zweiten zylindrischen Magneteinheit 220 umgeben. Auch diese ist als axialer Stapel aus einer Mehrzahl von Einzelmagneten zusammengesetzt und wirkt mit der ersten Magneteinheit 210 zusammen, um im Bereich des Leiterelements 110 ein mit der axialen Position variierendes Magnetfeld zu erzeugen.

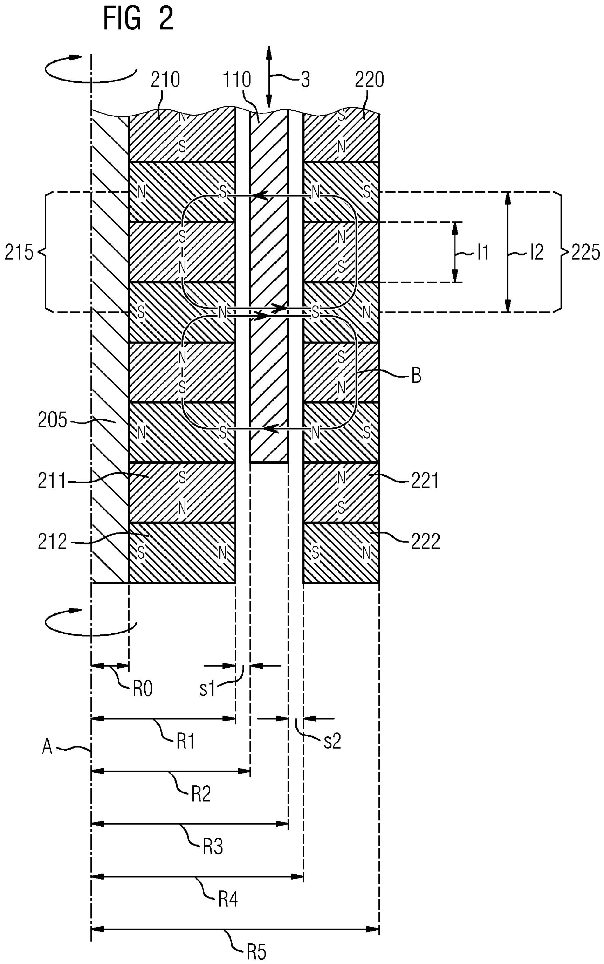

Der Aufbau der beiden Magneteinheiten 210 und 220 ist in der Detailansicht der Figur 2 näher verdeutlicht. So zeigt die Figur 2 einen Ausschnitt der Vorrichtung der Figur 1, und zwar im Bereich rechts der zentralen Achse A und im unteren Teil der beiden Magneteinheiten 210 und 220. Wie durch die beiden gekrümmten Pfeile angedeutet, ist die ganze Anordnung im Wesentlichen rotationssymmetrisch um die zentrale Achse ausgestaltet. So ist nicht nur das Leiterelement 110 als zylindrischer Ringleiter ausgestaltet, sondern auch die einzelnen Permanentmagnete sind ringförmige Magnetelemente.

Im gezeigten Beispiel sind beide Magneteinheiten 210 und 220 als ringförmige Halbach-Arrays ausgestaltet. Jede Magneteinheit ist dabei als axialer Stapel aus einer wechselnden Abfolge von axialen ringförmigen Permanentmagneten 211 bzw. 221 und radialen ringförmigen Permanentmagneten 212 bzw. 222 gebildet. Die axiale Länge 11 der einzelnen Permanentmagnete ist hier untereinander gleich, dies ist jedoch nicht zwingend erforderlich. Die Orientierung der jeweiligen axialen und radialen Magnete ist so, dass bei der inneren Magneteinheit 210 der magnetische Fluss auf der radial außenliegenden Seite verstärkt ist und bei der äußeren Magneteinheit 220 der magnetische Fluss auf der radial innenliegenden Seite verstärkt ist. Hierdurch wird gerade im Bereich des zylindrischen Leiterelements 110 ein besonders hoher magnetischer Fluss erreicht. Die Orientierung der einzelnen Permanentmagnete wechselt in diesem Beispiel in einer regelmäßigen periodischen Abfolge. Hierbei sind sowohl in der inneren als auch in der äußeren Magneteinheit einzelne axiale Teilsegmente 215 bzw. 225 mit gleicher Segmentlänge 12 ausgebildet, in denen sich der magnetische Fluss ringförmig schließt. Beispielhaft sind in Figur 2 die geschlossenen Flusslinien B für zwei solche axialen Segmente eingezeichnet. Die beiden Magneteinheiten 210 und 220 sind also so aufeinander abgestimmt, dass im Bereich des zylindrischen Leiterelements 110 in Abhängigkeit von der axialen Position eine wechselnde Ausrichtung des radialen Flusses bewirkt wird. Das Zusammenwirken der beiden Magneteinheiten 210 und 220 ist besonders vorteilhaft, wenn wie bei dem gezeigten Beispiel die axiale Abfolge der einzelnen Segmente untereinander gleich ist. Die Segmentfolge muss jedoch nicht periodisch sein, es ist z.B. auch denkbar, dass die Segmentlänge 12 nach unten hin kontinuierlich abfällt oder ansteigt, um eine Änderung der Dämpfungseigenschaften in Abhängigkeit von der Eintauchtiefe gezielt zu beeinflussen.

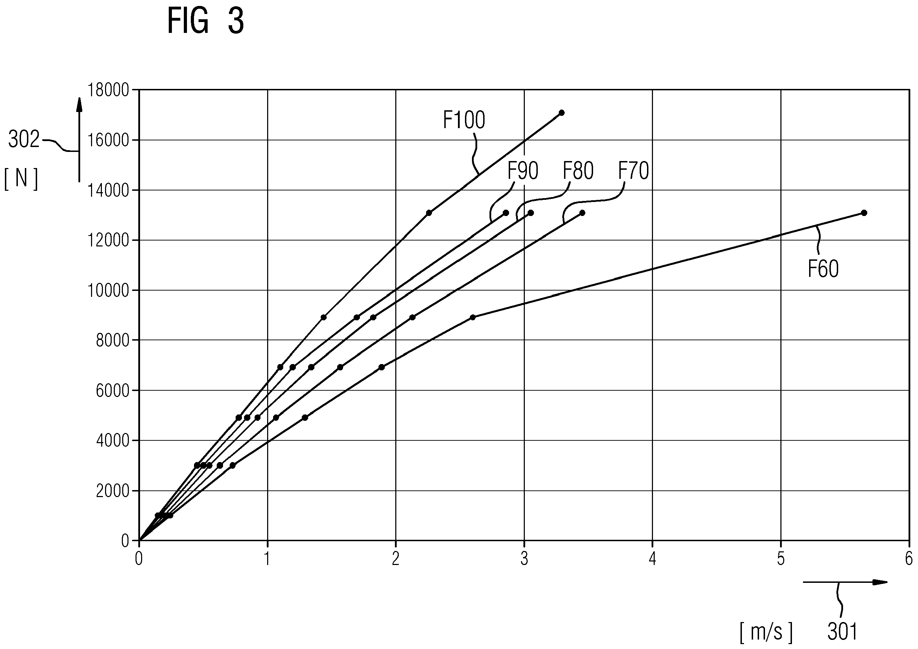

Die Dämpfungseigenschaften der gezeigten Vorrichtung werden einerseits von der Dimensionierung und der spezifischen Leitfähigkeit des Leiterelements 110 und andererseits von der Dimensionierung der beiden Magnetelemente und der magnetischen Eigenschaften des Materials der Permanentmagnete bestimmt. In Figur 3 sind Ergebnisse von Finite-Elemente-Simulationen für die Dämpfungskräfte in Abhängigkeit von der Relativgeschwindigkeit der beiden Hauptelemente 100, 200 für einen ausgewählten Parametersatz für das Beispiel der Figur 2 gezeigt. Für das Material des Leiterelements 110 ist hier Kupfer gewählt, und die einzelnen Permanentmagnete sind aus einer NdFeB-Legierung gebildet. Die effektive axiale Gesamtlänge L (s. Figur 1) beträgt 264 mm, und die Länge eines axialen Teilsegments 12 beträgt 26 mm. Der Innenradius R0 der ersten Magneteinheit 210 beträgt dabei 5 mm und der Außenradius R1 der ersten Magneteinheit 210 beträgt 22 mm. Der Innenradius R2 des Leiterelements 110 beträgt 23 mm und der Außenradius R3 des Leiterelements 110 beträgt 28 mm. Der Innenradius der zweiten Magneteinheit 220 beträgt 29 mm und der Außenradius der zweiten Magneteinheit 220 beträgt 36 mm. Damit ist die äußere Magneteinheit 220 in radialer Richtung dünner als die innere Magneteinheit 210, und zwischen dem Leiterelement 110 und der jeweils benachbarten Magneteinheit 210, 220 befindet sich ein radialer Spalt s1, s2 von jeweils 1 mm.

Figur 3 zeigt die mit diesen Parametern berechneten Dämpfungskräfte 302 in N/m für verschiedene Geschwindigkeiten 301 der Relativbewegung in m/s. Dabei zeigt die Kurve F100 die berechneten Dämpfungskräfte für eine Eintauchtiefe von 100 %, also bei maximaler Kompression der Dämpfungsvorrichtung. Wie in Figur 1 ersichtlich, hängt der axiale Überlapp 400 zwischen dem Leiterelement 110 und den Magneteinheiten 210, 220 von der Kompression der Dämpfungsvorrichtung 1 ab. Die prozentuale Eintauchtiefe ist dabei durch das Verhältnis zwischen diesem axialen Überlapp 400 und der effektiven axialen Gesamtlänge L gegeben. Bei einer Eintauchtiefe von 100 % ist der Überlapp gleich der Gesamtlänge, und die Vorrichtung ist vollständig komprimiert bis zum unteren Anschlag. Die weiteren Kurven F90, F80, F70 und F60 zeigen, dass die berechneten Dämpfungskräfte bei reduzierten Eintauchtiefen von 90 %, 80 %, 70 % bzw. 60 % aufgrund des verringerten axialen Überlapps geringer ausfallen. Diese Abhängigkeit der Dämpfungskraft 302 von der Eintauchtiefe kann dabei ein Vorteil sein, da es beispielsweise wünschenswert sein kann, bei höheren Beladungszuständen eine stärkere Dämpfung zu bewirken. Außerdem zeigen die simulierten Werte aus Figur 3, dass die erfindungsgemäße Vorrichtung prinzipiell geeignet ist, gerade für Anwendungen in Schienenfahrzeugen die benötigten hohen Dämpfungskräfte bei vergleichsweise niedrigen Geschwindigkeiten zu erreichen. So kann bei einer Relativgeschwindigkeit von 1 m/s zumindest bei voller Kompression eine Dämpfungskraft von 6 kN erreicht werden. Dies kann insbesondere mit dem oben beschriebenen vergleichsweise kompakten Aufbau erreicht werden, welcher sich als Retrofit-Lösung für einen vertikalen Dämpfer in einem Schienenfahrzeug eignet. Damit liegt auch die sogenannte Dämpfungsdichte in der für Bahnanwendungen erforderlichen Größenordnung.

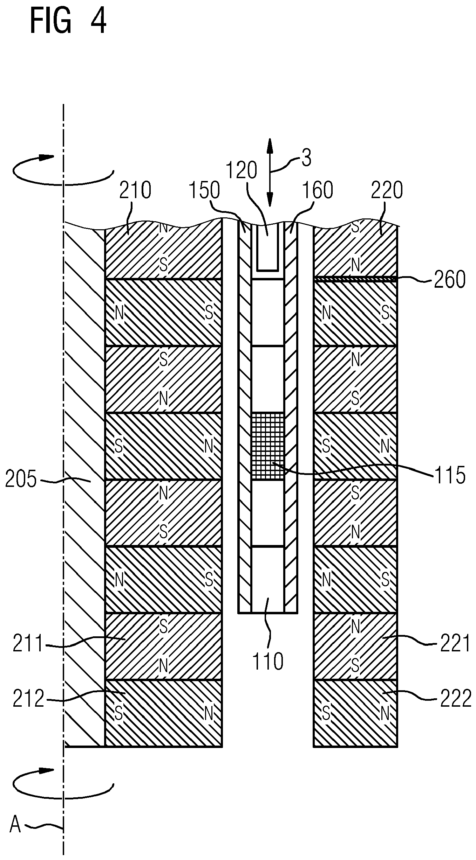

Das Ausführungsbeispiel der Figuren 1 und 2 ist als rein passive Dämpfungsvorrichtung ausgestaltet, bei dem nur ein einzelnes passives zylindrisches Leiterelement 110 vorgesehen ist, in dem die umgesetzte Bewegungsenergie in Wärme dissipiert wird. Alternativ dazu kann auch ein axialer Stapel von passiven ringförmigen Leiterelementen vorgesehen sein, und es können wahlweise auch ein oder mehrere Spulen mit elektrischen Anschlüssen in den Stapel integriert sein. Ein solches alternatives Ausführungsbeispiel ist in Figur 4 gezeigt, auch hier wiederum als Detailansicht ähnlich wie in Figur 2. Die Magneteinheiten 210, 220 sind ähnlich ausgestaltet wie beim vorhergehenden Beispiel. Im ersten Hauptelement sind hier allerdings mehrere passive ringförmige Leiterelemente 110 in einem axialen Stapel angeordnet. Es kann sich hier beispielsweise um einen axialen Stapel von einzelnen Kupferringen handeln. Diese einzelnen Leiterelemente 110 können von einem metallischen Trägerrohr gestützt sein. Beispielhaft ist hier ein innenliegendes metallisches Trägerrohr 150 gezeigt. Zusätzlich kann auch auf der Außenseite ein weiteres tragendes Element vorliegen. In diesem Beispiel ist ein metallisches Verbindungselement 160 dargestellt, welches ebenfalls rohrförmig ausgebildet ist. Über dieses Verbindungselement 160 ist hier die mechanische Anbindung an das erste Befestigungselement 180 im Kopfbereich der Vorrichtung realisiert. Außerdem kann durch das metallische Material dieses Verbindungselements 160 ein Abtransport der in den Leiterelementen 110 dissipierten Wärme in den Bereich des Befestigungselements 180 und/oder der Außenwand 190 bewirkt werden. Um den Abtransport der dissipierten Wärme nach außen zu unterstützen, kann die zweite Magneteinheit mit optionalen metallischen Scheiben durchsetzt sein. Nur beispielhaft ist in Figur 4 an einer Stelle eine solche metallische Scheibe 260 gezeigt.

Optional können innerhalb des ersten Hauptelements 100 ein oder mehrere der einzelnen passiven Leiterelemente 110 in dem axialen Stapel durch aktive Spulen ersetzt sein. Beispielhaft ist in Figur 4 eine solche Spule 115 gezeigt. Es handelt sich um eine gewickelte Spule mit einer Vielzahl von Leiterwindungen, wobei die Spule in den Endbereichen des gewickelten Leiters mit hier nicht gezeigten elektrischen Anschlüssen versehen ist. Über diese Anschlüsse kann die Spule mit einem äußeren Stromkreis verbunden werden. Auf diese Weise kann bei der Dämpfung auch Energie in Form von elektrischer Energie rückgewonnen werden und insbesondere innerhalb der Dämpfungsvorrichtung genutzt werden. So kann mit der von der Spule 115 bereitgestellten elektrischen Energie auch ein optionaler magnetischer Sensor 120 betrieben werden, um einen Zustand der Dämpfungsvorrichtung zu überwachen. Alternativ kann mit einer solchen Spule auch eine Dämpfungseigenschaft der Vorrichtung geregelt werden und/oder es kann über eine elektrische Eigenschaft der Spule der Zustand der Vorrichtung überwacht werden. Für die beschriebenen Anwendungen können insbesondere auch mehrere separate Spulen 115 vorgesehen sein, oder die Funktionalität kann auch von einer einzelnen Spule bereitgestellt werden. Aufgrund der Möglichkeit der anteiligen Energierückgewinnung kann insbesondere auch bei dieser semi-aktiven Variante die gesamte Dämpfungsvorrichtung energie-autark ausgebildet sein und ohne äußere elektrische Anschlüsse ausgebildet sein. Hierdurch kann sie trotz der zusätzlichen Funktionalität nach außen hin insgesamt ähnlich robust ausgestaltet sein wie die vorab geschriebene rein passive Variante.

### Bezugszeichenliste

- 1: Dämpfungsvorrichtung
- 3: Bewegungsrichtung der Relativbewegung
- 100: erstes Hauptelement
- 110: zylindrisches Leiterelement
- 115: zylindrische Spule
- 120: magnetischer Sensor
- 150: metallisches Trägerrohr
- 160: Verbindungselement
- 180: erstes Befestigungselement
- 190: Außenwand
- 200: zweites Hauptelement
- 205: zentraler Trägerstab
- 210: erste zylindrische Magneteinheit
- 211: axiale ringförmige Permanentmagnete
- 212: radiale ringförmige Permanentmagnete
- 215: axiales Teilsegment
- 220: zweite zylindrische Magneteinheit
- 221: axiale ringförmige Permanentmagnete
- 222: radiale ringförmige Permanentmagnete
- 225: axiales Teilsegment
- 260: metallische Scheibe
- 280: zweites Befestigungselement
- 301: Geschwindigkeit in m/s
- 302: Dämpfungskraft in N
- 400: axialer Überlapp
- A: zentrale Achse
- B: magnetische Flussdichte
- F60: Kraft bei 60 % Eintauchtiefe
- F70: Kraft bei 70 % Eintauchtiefe
- F80: Kraft bei 80 % Eintauchtiefe
- F90: Kraft bei 90 % Eintauchtiefe
- F100: Kraft bei 100 % Eintauchtiefe
- 11: axiale Länge eines Permanentmagneten
- 12: axiale Länge eines Teilsegments
- L: effektive axiale Gesamtlänge
- R0: Innenradius der ersten Magneteinheit
- R1: Außenradius der ersten Magneteinheit
- R2: Innenradius des Leiterelements
- R3: Außenradius des Leiterelements
- R4: Innenradius der zweiten Magneteinheit
- R5: Außenradius der zweiten Magneteinheit
- s1: innerer Spalt
- s2: äußerer Spalt

## Patentansprüche

1. Dämpfungsvorrichtung (1) zur schwingungsisolierenden Kopplung zweier mechanischer Systeme, insbesondere zweier Teilsysteme in einem Schienenfahrzeug,
- wobei die Dämpfungsvorrichtung (1) ein erstes (100) und ein zweites (200) Hauptelement aufweist, welche entlang einer zentralen Achse (A) relativ zueinander beweglich sind,
- wobei das erste Hauptelement (100) wenigstens ein zylindrisch geformtes Leiterelement (110, 115, 160) aufweist, welches ringförmig um die zentrale Achse (A) angeordnet ist,
- und wobei das zweite Hauptelement (200) eine erste zylindrische Magneteinheit (210) aufweist, welche ringförmig um die zentrale Achse (A) angeordnet ist und eine Mehrzahl von ringförmigen Permanentmagneten (211, 212) aufweist, durch die im Bereich des zylindrischen Leiterelements (110, 115, 160) eine mit der axialen Position variierende magnetische Flussdichte (B) ausgebildet wird,
- so dass eine axiale Relativbewegung (3) der beiden Hauptelemente (100, 200) die Induktion eines Ringstroms in dem zylindrischen Leiterelement (110, 115, 160) bewirken kann, wodurch eine Dämpfung der Relativbewegung (3) erfolgt,
- wobei das wenigstens eine Leiterelement (110, 115, 160) so ausgelegt ist, dass bei der Dämpfung ein überwiegender Teil der umgewandelten kinetischen Energie in Wärme umgewandelt wird.

2. Dämpfungsvorrichtung (1) nach Anspruch 1, bei welcher das zweite Hauptelement (200) zusätzlich eine zweite zylindrische Magneteinheit (220) aufweist, welche ringförmig um die zentrale Achse (A) angeordnet ist und eine Mehrzahl von ringförmigen Permanentmagneten (221,222) aufweist,
- wobei die erste Magneteinheit (210) radial innerhalb und die zweite Magneteinheit (220) radial außerhalb von dem wenigstens einen zylindrisch geformten Leiterelement (110, 115) angeordnet ist.

3. Dämpfungsvorrichtung (1) nach einem der Ansprüche 1 oder 2, bei welcher die jeweilige Magneteinheit (210, 220) einen axialen Stapel von ringförmigen Permanentmagneten (211, 212, 221, 222) aufweist, welche zusammen eine periodische Abfolge von axialen Teilsegmenten (215, 225) mit abwechselnder radialer Flussrichtung ausbilden.

4. Dämpfungsvorrichtung (1) nach Anspruch 3, bei welcher die jeweilige Magneteinheit (210, 220) als ringförmiges Halbach-Array ausgebildet ist.

5. Dämpfungsvorrichtung (1) nach einem der vorhergehenden Ansprüche, bei welcher das erste Hauptelement (100) ein oder mehrere massive, ringförmige zylindrische Leiterelemente (110) aufweist.

6. Dämpfungsvorrichtung (1) nach einem der vorhergehenden Ansprüche, bei welcher das erste Hauptelement (100) wenigstens eine zylindrische Spule (115) mit ein oder mehreren Leiterwindungen aufweist.

7. Dämpfungsvorrichtung (1) nach Anspruch 6, bei welcher die Spule (115) elektrische Anschlüsse aufweist, die mit einem äußeren Stromkreis verbunden oder verbindbar sind,
wobei der äußere Stromkreis insbesondere zur Rückgewinnung von elektrischer Energie aus der gedämpften Bewegung und/oder zur Messung einer elektrischen Kenngröße der Spule und/oder zur Regelung einer elektrischen Eigenschaft des Stromkreises ausgelegt ist.

8. Dämpfungsvorrichtung (1) nach einem der vorhergehenden Ansprüche, welche ein oder mehrere magnetische Sensoren (120) im Bereich des ersten und/oder zweiten Hauptelements (100, 200) aufweist.

9. Dämpfungsvorrichtung (1) nach einem der vorhergehenden Ansprüche, bei dem im Bereich eines radialen Zwischenraums (s1, s2) zwischen dem ersten Hauptelement und dem zweiten Hauptelement zumindest eines der Hauptelemente mit Polytetrafluorethylen beschichtet ist.

10. Dämpfungsvorrichtung (1) nach einem der vorhergehenden Ansprüche, bei welcher das wenigstens eine zylindrisch geformte Leiterelement (110) mechanisch von einem radial innenliegenden oder außenliegenden metallischen Trägerrohr gestützt wird.

11. Dämpfungsvorrichtung (1) nach einem der vorhergehenden Ansprüche, bei welchem das erste Hauptelement (100) ein erstes Befestigungselement (180) zur mechanischen Verbindung mit dem ersten mechanischen Teilsystem aufweist,
wobei das wenigstens eine zylindrisch geformte Leiterelement (110) über ein metallisches Verbindungselement (160) mit dem ersten Befestigungselement (180) verbunden ist.

12. Dämpfungsvorrichtung (1) nach einem der vorhergehenden Ansprüche, bei welcher das erste Hauptelement (100) eine Mehrzahl von konzentrisch ineinander liegenden zylindrischen Leiterelementen (110) aufweist, wobei jedem zylindrischen Leiterelement wenigstens eine radial benachbarte Magneteinheit (210,220) zugeordnet ist.

13. Dämpfungsvorrichtung (1) nach einem der vorhergehenden Ansprüche, bei welcher durch die relative Position von erstem und zweiten Hauptelement eine Eintauchtiefe (t) definiert ist,
wobei eine größere Eintauchtiefe (t) einen größeren axialer Überlapp (400) zwischen erstem (100) und zweitem (200) Hauptelement und dadurch eine stärkere Dämpfung bewirkt.

14. Dämpfungsvorrichtung (1) nach einem der vorhergehenden Ansprüche, welche so ausgelegt ist, dass bei einer Relativgeschwindigkeit der beiden Hauptelemente von 1 m/s eine Dämpfungskraft von wenigstens 8 kN bewirkt wird.

15. Schienenfahrzeug mit einer Dämpfungsvorrichtung (1) nach einem der vorhergehenden Ansprüche.
